(19) Europäisches Patentamt / European Patent Office / Office européen des brevets

(11) EP 1 554 345 B1

(12) **EUROPEAN PATENT SPECIFICATION**

(45) Date of publication and mention of the grant of the patent:
**19.12.2007 Bulletin 2007/51**

(21) Application number: **03753534.1**

(22) Date of filing: **09.10.2003**

(51) Int Cl.:
***C08L 43/02*** *(2006.01)* ***C09D 11/00*** *(2006.01)*
***C09D 11/16*** *(2006.01)*

(86) International application number:
**PCT/EP2003/011189**

(87) International publication number:
**WO 2004/035684 (29.04.2004 Gazette 2004/18)**

(54) **PROCESS FOR PRINTING SUBSTRATES ACCORDING TO THE INK-JET PRINTING METHOD**

VERFAHREN ZUM BEDRUCKEN VON SUBSTRATEN MIT HILFE DES TINTENSTRAHLDRUCKVERFAHRENS

IMPRESSION DE SUBSTRATS SELON LE PROCEDE D'IMPRESSION A JET D'ENCRE

(84) Designated Contracting States:
**AT BE BG CH CY CZ DE DK EE ES FI FR GB GR HU IE IT LI LU MC NL PT RO SE SI SK TR**

(30) Priority: **17.10.2002 EP 02405888**

(43) Date of publication of application:
**20.07.2005 Bulletin 2005/29**

(73) Proprietor: **Ciba Specialty Chemicals Holding Inc.**
**4057 Basel (CH)**

(72) Inventors:
- **BUJARD, Patrice**
**CH-4153 Reinach (CH)**
- **SIEBER, Werner**
**CH-4125 Riehen (CH)**
- **BIRY, Stéphane**
**F-68128 Village-Neuf (FR)**

(56) References cited:
**EP-A- 0 822 238** **EP-A- 1 195 410**
**US-A- 5 310 778** **US-A- 5 707 433**
**US-A1- 2002 035 173** **US-B1- 6 433 117**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 554 345 B1

Printed by Jouve, 75001 PARIS (FR)

## Description

The present Invention relates to a process for printing substrates, for example paper, plastics films or textile fibre materials, according to the ink-jet printing method, and to the ink compositions used in accordance with that process.

US-B-6,433,117 relates to aqueous ink jet inks containing a copolymer dispersant comprising at least one polymerized monomer having the general formula

$$CH_2=C(R^3)C(O)OX_a(C_2H_4O)_b-(C_5H_6O)_c-R^4,$$

where
a=0 or 1; when a=1, X is an akyl, aryl, or alkaryl diradical connecting group of 1-9 carbon atoms; b and c are independently selected from the range of 0-100 provided that b and c are not simultaneously 0; $R^3$ is H or $CH_3$; and $R^4$ is preferably $PO_3H_2$.

DE-A-19727767 relates to radiation curable ink jet inks containing at least one fine-grained organic or inorganic pigment, interference pigments are mentioned as examples of inorganic pigments. Preferably 95 %, especially preferred 99 % of the pigments have a particle size ≤ 1 μm.

Although organic pigments are superior to dyes in terms of fastness to light, problems arise with respect to dispersion in water-based ink compositions and with respect to the removal of non-dispersible agglomerates therefrom.

It has now, surprisingly, been found that metallic or non-metallic, inorganic platelet-shaped particles having an average particle diameter of from > 2 to 20 μm, especially from 3 to 15 μm, can readily be dispersed in water-based ink compositions and the particles, if they have settled, can readily be redispersed, for example by shaking.

The present invention accordingly relates to an aqueous ink composition that comprises

A) metallic or non-metallic, inorganic platelet-shaped particles having an average particle diameter of at least 2 μm, wherein the platelet-shaped particles are pigments that comprise (a1) a core consisting of a substantially transparent or metallically reflecting material and (a2) at least one coating substantially consisting of one or more silicon oxides wherein the average molar ratio of oxygen to silicon is from 0.03 to < 0.95,
B) a dispersant and C) a binder, and also

to a process for printing substrates according to the ink-jet printing method that comprises printing the substrates with the above-mentioned aqueous ink composition.

The layer (a2) can also be represented as follows: $SiO_x$ wherein $0.03 \leq x < 0.95$, especially $0.05 \leq x \leq 0.50$, very especially $0.10 \leq x \leq 0.30$.

So, the present invention relates also to aqueous ink compositions in which the pigments used are those described in EP-B-803,549 and PCT/EP03/09296.

Metallic or non-metallic, inorganic platelet-shaped particles or pigments are effect pigments, (especially metal effect pigments or interference pigments), that Is to say, pigments that, besides imparting colour to an application medium, impart additional properties, for example angle dependency of the colour (flop), lustre (not surface gloss) or texture. On metal effect pigments, substantially oriented reflection occurs at directionally oriented pigment particles. In the case of interference pigments, the colour-imparting effect is due to the phenomenon of interference of light in thin, highly refractive layers.

The average particle diameter is determined by electron microscopy. The average particle diameter or the size grade of the platelet-shaped particles can be adjusted in accordance with the invention also by means of (test) sieving machines, for example the vibratory sieving machine "Analysette 3", model PRO (Fritsch), using micro-precision sieves of 100 ∅ according to ISO 3310-3 with aperture sizes of 5 μm, 10 μm, 15 μm and 20 μm. For that purpose, two sieves are positioned one above the other in the test sieving machine in such a manner that the mesh size decreases in the downward direction. This means that the material passing through the upper sieve falls onto the next sieve in the arrangement. As a result, a certain number of particles are retained on the individual sieves. The size grade of those particles is characterised by the mesh size of the upper sieve (10 μm, 15 μm or 20 μm, preferably 15 μm or 20 μm) and of the receiving sieve (5 μm, 10 μm or 15 μm, preferably 5 μm or 10 μm).

A preferred embodiment of the present invention employs aqueous ink compositions in which metal flakes, especially silver flakes and aluminium flakes, are used as the platelet-shaped particles. Such metal flakes, especially silver flakes, can be used to produce conductive inks.

The term "$SiO_z$ with $0.95 \leq z \leq 2.0$" means that the molar ratio of oxygen to silicon at the average value of the silicon oxide layer is from 0.95 to 2.0. The composition of the silicon oxide layer can be determined by ESCA (electron spectroscopy for chemical analysis).

The term "$SiO_x$ with $0.03 \leq x \leq 0.95$" means that the molar ratio of oxygen to silicon at the average value of the silicon oxide layer is from 0.03 to 0.95. The composition of the silicon oxide layer can be determined by ESCA (electron spectroscopy for chemical analysis).

According to the present invention the term "aluminum" comprises aluminum and alloys of aluminum. Alloys of aluminum are, for example, described in G. Wassermann in Ullmanns Enzyklopädie der Industriellen Chemie, 4. Auflage, Verlag Chemie, Weinheim, Band 7, S. 281 to 292. Especially suitable are the corrosion stable aluminum alloys described on page 10 to 12 of WO00/12634, which comprise besides of aluminum silicon, magnesium, manganese, copper, zinc, nickel, vanadium, lead, antimony, tin, cadmium, bismuth, titanium, chromium and/or iron in amounts of less than 20 % by weight, preferably less than 10 % by weight.

The aluminium flakes are preferably obtained by means of a process (see, for example, WO00/18978, WO02/090613, WO03/90613, US-B-6,270,840, US-A-4,321,087) comprising the following steps:

a) vapour-deposition of a separating agent onto a (movable) carrier to produce a separating-agent layer,
b) vapour-deposition of an aluminium layer onto the separating-agent layer,
c) dissolution of the separating-agent layer in a solvent, and
d) separation of the aluminium flakes from the solvent.

The process mentioned above makes available aluminium flakes that have a high degree of plane parallelism and a defined thickness in the region of ± 10 %, preferably ± 5 %, of the average thickness.

The aluminium flakes have an average diameter of at least 2 μm, especially from > 2 to 20 μm, more especially from 3 to 15 μm, and most preferred from 5 to 15 μm. The thickness of the aluminium flakes is generally from 10 to 150 nm, especially from 10 to 100 nm, and more especially from 30 to 60 nm.

In order to be able to use the aluminium pigments in aqueous ink-jet compositions, it is necessary for those pigments to be protected against corrosion by water. According to R. Besold, Aluminiumpigmente für wässrige Beschichtungen - Widerspruch oder Wirklichkeit?, Farbe + Lack 97 (1991) 311 - 314, a large number of procedures, which can be divided into two groups, are known for the stabilisation of aluminium pigments:

- adsorption of corrosion inhibitors on the pigment surface
  - phosphoric acid esters: DE-A-3020073, EP-A-170474, EP-A-133644, US-A-4,565,716, US-A-4,808,231,
    - phosphates and phosphites: US-A-4,565,716, US-A-4,808,231, EP-A-240367,
    - vanadates : EP-A-305560, EP-A-104075,
    - chromates: US-A-2,904,523, US-A-4,693,754, EP-A-259592,
    - dimeric acids: DE-A-3002175, and
  - encapsulation of the pigments with a continuous inorganic protective layer:
    - $SiO_2$: US-A-2,885,366, US-A-3,954,496,
    - $Fe_2O_3$: DE-A-3003352,
    - $TiO_2$: DE-A-3813335,

  or organic protective layer;

    - DE-A-3630356, DE-A-3147177, EP-A-477433, especially resins modified with phosphoric acid: EP-A-170474, CA-A-1,273,733, AT-A-372696, DE-A-3807588, EP-A-319971,

In order to produce the aluminium pigment from the (multi-layered) film, first of all the separating-agent layer Is dissolved using a solvent, the film is peeled off the substrate, and the fragments of film produced as a result are comminuted, If appropriate after washing and filtering. Comminution of the fragments of film to pigment size is effected by means of ultrasound or by mechanical means using high-speed stirrers in a liquid medium, or after drying the fragments in an air-jet mill having a rotary classifier. Depending on whether the pigment comminution is carried out in a liquid medium or in the dry state, the free metal surfaces of the aluminium pigment, which is obtained in a particle size of from 5 to 60 μm, preferably from 12 to 36 μm, are covered with a passivating protective layer either during the comminution procedure, or following that procedure, by means of one of the above-mentioned processes (see EP-A-826745).

A further embodiment of the present invention employs aqueous ink compositions in which the platelet-shaped particles used are $SiO_z$-, especially $SiO_2$-coated aluminium flakes.

The $SiO_z$-, especially $SiO_2$-coated aluminium flakes are generally particles having an average diameter of at least 2 μm, especially from > 2 to 20 μm, more especially from 3 to 15 μm, and most preferred 5 to 15 μm. The thickness of the pigments is generally from 30 nm to 0.5 μm, especially from 30 to 500 nm, and more especially from 40 to 300 nm, the particles having an aluminium core with two substantially parallel faces, the distance between which faces is

the shortest axis of the core, and having an $SiO_2$ layer applied to those parallel faces or to the entire surface, and, optionally, further layers. The further layers can be applied to the parallel faces or to the entire surface. The thickness of the aluminium layer is generally from 10 nm to 150 nm, especially from 10 nm to 100 nm, and more especially from 30 to 60 nm. The thickness of the $SiO_z$ layer is generally from 10 nm to 175 nm, especially from 15 nm to 100 nm, and more especially from 15 to 80 nm.

For instance, the platelet-shaped aluminum particles comprise:

an aluminum layer having a top surface, a bottom surface, and at least one side surface, and having a thickness of 30 nm to 60 nm, especially 30 to 50 nm; and a $SiO_2$ layer with $0.95 \leq z \leq 2.0$, especially $1.1 \leq z \leq 2.0$, more especially $1.4 \leq z \leq 2,0$, and most preferred z = 2 on each of the top and bottom surfaces but not on the at least one side surface, having a thickness of 15 to 80 nm, especially 10 to 25 nm. The aluminium flakes have an average diameter of at least 2 $\mu$m, especially from > 2 to 20 $\mu$m, more especially from 3 to 15 $\mu$m, and most preferred from 5 to 15 $\mu$m.

The aluminum flakes of the present invention are not of a uniform shape. Nevertheless, for purposes of brevity, the flakes will be referred to as having a "diameter." The aluminum flakes have a high plane-parallelism and a defined thickness In the range of ±30 %, especially ± 10 % of the average thickness. The aluminum flakes have a thickness of from 60 to 220 nm, especially from 50 to 100 nm. It is presently preferred that the diameter of the flakes be in a preferred range of > 2 to 20 $\mu$m with a more preferred range of about 3 - 15 $\mu$m. Thus, the aspect ratio of the flakes of the present invention Is in a preferred range of about 9 to 335 with a more preferred range of about 30 to 300.

When the $SiO_2$ layer is applied to the aluminium flakes by a wet-chemical method, as described, for example, in DE-A-19501307, US-B-5,763,086, DE-A-4405492 (Example 1, tetraethoxysilane), DE-A-4437752 (CVD method, gaseous phase decomposition of organosilicon compounds), DE-C-4414079 (CVD method, decomposition of silicon compounds that contain nitrogen but no alkanoyloxy radicals, especially decomposition of 3-aminopropyltriethoxysilane), US-A-2,885,366 (water glass solution), the entire surface of the aluminium flakes is covered with an $SiO_2$ layer. Preferably, the $SiO_2$-coated ($0.95 \leq z \leq 2.0$) aluminium flakes are obtained by a method (see, for example, US-B-6,270,840, WO00/18978, WO02/090613, WO03/90613) which comprises the following steps:

a) vapour-deposition of a separating agent onto a (movable) carrier to produce a separating-agent layer,
b) vapour-deposition of an $SiO_y$ layer ($0.95 \leq y \leq 1.80$) onto the separating-agent layer,
c) vapour-deposition of an aluminium layer onto the $SiO_y$ layer obtained in step b),
d) vapour-deposition of on $SiO_y$ layer ($0.95 \leq y \leq 1,80$, especially $1.00 \leq y \leq 1.80$, more epecially $1.10 \leq y \leq 1.50$) onto the aluminium layer obtained in step c),
e) dissolution of the separating-agent layer in a solvent, and
f) separation of the $SiO_y$-coated aluminium flakes from the solvent.

The process mentioned above makes available $SiO_y$-coated aluminium flakes have a high degree of plane parallelism and a defined thickness in the region of ± 10 %, preferably ± 5 %, of the average thickness.

Comminution of the fragments of film to pigment size can be effected, for example, by means of ultrasound or by mechanical means using high-speed stirrers in a liquid medium, or after drying the fragments in an air-jet mill having a rotary classifer. Depending on whether the pigment comminution is carried out in a liquid medium or in the dry state, passivation of the free metal surfaces of the aluminium pigment is carried out either during the comminution procedure, or following that procedure, by means of one of the above-mentioned processes.

Further interference pigments preferred in accordance with the invention, which can be prepared in analogy to the above-described process, have the following layer structure: thin, semi-opaque metal layer (chromium, nickel)/dielectric layer ($SiO_2$, $MgF_2$, $Al_2O_3$)/reflecting metal layer (aluminium)/dielectric layer/thin, semi-opaque metal layer, especially chromium/$SiO_2$/aluminium/$SiO_2$/chromium and chromium/$MgF_2$/aluminium/$MgF_2$/chromium (US-A-5,059,245);
TM'TMTM'T or TM'TM'T. wherein M' is a semi-transparent metal layer, especially an aluminium or aluminium-based metal layer, T is a transparent dielectric of low refractive index and M is a highly reflective opaque aluminium or aluminium-based layer, especially $SiO_2$/Al/$SiO_2$/Al/$SiO_2$ and $SiO_2$/Al/$SiO_2$/Al/$SiO_2$/Al/$SiO_2$(US-A-3,438,796).

Preference is given to the use of pigments having the following layer structure:

(a3) $SiO_z$, especially $SiO_2$,
(a2) $SiO_x$ wherein $0.03 \leq x < 0.95$, especially $0.05 \leq x \leq 0.50$, very especially $0.10 \leq x \leq 0.30$, (a1) a core consisting of a substantially transparent or metallically reflecting material and
(a2) $SiO_x$ wherein $0.03 \leq x < 0.95$, especially $0.05 \leq x \leq 0.50$, very especially $0.10 \leq x \leq 0.30$, (a3) $SiO_z$, especially $SiO_2$, or
(a4) a coating consisting of any desired solid material the composition of which is different from that of the coating (a3),

(a3) $SiO_z$, especially $SiO_2$,
(a2) $SiO_x$ wherein $0.03 \le x < 0.95$, especially $0.05 \le x \le 0.50$, very especially $0.10 \le x \le 0.30$, (a1) a core consisting of a substantially transparent or metallically reflecting material and
(a2) $SiO_x$ wherein $0.03 \le x < 0.95$, especially $0.05 \le x \le 0.50$, very especially $0.10 \le x \le 0.30$, (a3) $SiO_z$, especially $SiO_2$,
(a4) a coating consisting of any desired solid material the composition of which is different from that of the coating (a3).

When the core consists of a metallically reflecting material, that material is preferably selected from Ag, Al, Au, Cu, Cr, Ge, Mo, Ni, Si, Ti, Zn, alloys thereof, graphite, $Fe_2O_3$ and $MoS_2$. Special preference is given to Al.
When the core consists of a transparent material, the material is preferably selected from mica, $SiO_z$ wherein $1.10 \le y \le 2.0$, especially $1.40 \le y \le 2.0$, $SiO_2$ and $SiO_2/TiO_2$ mixtures. Special preference is given to silicon dioxide.
The material of coating (a4) is preferably a dielectric material having a "high" refractive index, that is to say a refractive index greater than about 1.65, preferably greater than about 2.0, most preferred greater than about 2.2, which is applied to the entire surface of the silicon/silicon oxide substrate. Examples of such a dielectric material are zinc sulfide (ZnS), zinc oxide (ZnO), zirconium oxide ($ZrO_2$) titanium dioxide ($TiO_2$), carbon, indium oxide ($In_2O_3$), indium tin oxide (ITO), tantalum pentoxide ($Ta_2O_5$), chromium oxide ($Cr_2O_3$), cerium oxide ($CeO_2$), yttrium oxide ($Y_2O_3$), europium oxide ($Eu_2O_3$), iron oxides such as iron(II)/iron(III) oxide ($Fe_3O_4$) and iron(III) oxide ($Fe_2O_3$) hafnium nitride (HfN), hafnium carbide (HfC), hafnium oxide ($HfO_2$), lanthanum oxide ($La_2O_3$), magnesium oxide (MgO), neodymium oxide ($Nd_2O_3$), praseodymium oxide ($Pr_6O_{11}$), samarium oxide ($Sm_2O_3$), antimony trioxide ($Sb_2O_3$), silicon monoxides (SiO), selenium trioxide ($Se_2O_3$), tin oxide ($SnO_2$), tungsten trioxide ($WO_3$) or combinations thereof. The dielectric material is preferably a metal oxide, it being possible for the metal oxide to be a single oxide or a mixture of oxides, with or without absorbing properties, for example $TiO_2$, $ZrO_2$, SiO, $SiO_2$, $SnO_2$, $GeO_2$, ZnO, $Al_2O_3$, $V_2O_5$, $Fe_2O_3$, $Fe_3O_4$, $Cr_2O_3$, $PbTiO_3$ or CuO, or a mixture thereof, with $TiO_2$ and $ZrO_2$ being especially preferred.
It is possible to obtain pigments that are more intense in colour and more transparent by applying, on top of the coating (a4), especially the $TiO_2$ layer, a metal oxide of low refractive index, such as $SiO_2$, $Al_2O_3$, AlOOH, $B_2O_3$ or a mixture thereof, preferably $SiO_2$ (WO93/08237).
Additional coatings may be applied in a manner known *per se* for the purpose of stabilisation with respect to weather and light.
The metal oxide layers are preferably applied by a wet-chemical method, in which context it is possible to employ the wet-chemical coating techniques developed for the preparation of pearl lustre pigments; techniques of this kind are described, for example, in DE-A-1467468, DE-A-1959988, DE-A-2009566, DE-A-2214545, DE-A-2215191, DE-A-2244298, DE-A-2313331, DE-A-2522572, DE-A-3137808, DE-A-3137809, DE-A-3151343, DE-A-3151354, DE-A-3151355, DE-A-3211602 and DE-A-3235017, DE-A-1959988, WO93/08237, and WO 98/53001, or else in further patent documents and other publications.
For coating, the substrate particles are suspended in water, and one or more hydrolysable metal salts are added at a pH which is appropriate for hydrolysis and is chosen such that the metal oxides and/or metal oxide hydrates are precipitated directly onto the particles without any instances of secondary precipitation. The pH is kept constant usually by simultaneous metered addition of a base or alkali. The pigments are subsequently separated off, washed and dried and, if desired, calcined, the calcination temperature possibly being optimized in respect of the particular coating. If desired, following the application of individual coatings the pigments can be separated off, dried and, if desired, calcined before being resuspended for the application of further layers by precipitation (cf. US-A-6,132,873).
In an especially preferred embodiment, the pigment has the following layer structure:

$SiO_x/SiO_z/SiO_x$, $SiO_z/SiO_xSiO_z/SiO_x/SiO_z$, especially $SiO_2/SiO_x/SiO_z/SiO_x/SiO_2$, $SiO_x/Al/SiO_x$, $SiO_z/SiO_x/Al/SiO_x/SiO_z$, especially $SiO_2/SiO_x/Al/SiO_x/SiO_2$, $TiO_2/SiO_z/SiO_x/SiO_z/SiO_x/SiO_z/TiO_2$, especially $TiO_2/SiO_2/SiO_x/SiO_z/SiO_x/SiO_2/TiO_2$ or $TiO_2/SiO_z/SiO_x/Al/SiO_x/SiO_z/TiO_2$, especially $TiO_2/SiO_2/SiO_x/Al/SiO_x/SiO_2/TiO_2$, wherein $0.03 \le x < 0.95$, especially $0.05 \le x \le 0.50$, and $0.95 \le z \le 2.0$, especially $1.10 \le z \le 2.0$.

The $SiO_z$ layers are preferably obtained by heating a preferably stoichiometric mixture of fine silicon and quartz ($SiO_2$) powder in a vaporiser described, for example, in DE-C-4342574 and in US 6 202 591 to more than 1300°C under a high vacuum. The reaction product is silicon monoxide gas, which under vacuum is directed directly onto the passing carrier, where it is condensed as $SiO_y$ wherein $1 \le y \le 1.8$, especially wherein $1.1 \le y \le 1.5$. Except under an ultra-high vacuum, in industrial vacuums of a few $10^{-2}$ Pa vaporised SiO always condenses as $SiO_y$ because high-vacuum apparatuses always contain, as a result of gas emission from surfaces, traces of water vapour which react with the readily reactive SiO at vaporisation temperature. The $SiO_y$ layers can be converted to $SiO_2$ layers by means of oxidative heat treatment. Methods known for that purpose are available. Air or another oxygen-containing gas is passed for several hours through the plane-parallel bodies in the form of loose material or in a fluidised bed at a temperature of more than 200°C, preferably more than 400°C and especially from 500 to 1000°C.
If, under industrial vacuums of a few $10^{-2}$ Pa, Si is vaporised instead of SiO, silicon oxides that have a less-than-equimolar oxygen content are obtained, that is to say $SiO_x$ wherein $0.03 \leq \times < 0.95$, especially $0.05 \leq \times \leq 0.5$, more especially $0.1 \leq x \leq 0.3$, which have astonishingly high stability to oxidation along with a high refractive index, even in thin layers. Those $SiO_x$ layers have a natural oxide film in the region of approximately 2 nm. Heating in the presence of oxygen at from 150 to 500°C, preferably from 175 to 300°C, unexpectedly results in a very thin, for example approximately 20 nm thick, superficial silicon dioxide layer, which is a very convenient method of producing structures having the layer sequence $SiO_2/SiO_x/SiO_z/SiO_x/SiO_2$ wherein $1.0 \leq z \leq 2.0$, especially $1.1 \leq z \leq 2.0$. If thicker silicon dioxide layers are desired, they may be conveniently produced, as described above, by means of vapour-deposition of $SiO_y$ and oxidative heat-treatment thereof.

The pigments used in accordance with the invention and described in EP-B-803549 and PCT/EP03/09296 are generally particles having an average diameter of at least 2 μm, especially from > 2 to 20 μm, more especially from 3 to 15 μm. The thickness of the pigments is generally from 20 nm to 1.5 μm, preferably from 200 to 500 nm, the particles having a core, preferably of $SiO_2$ or aluminium, with two substantially parallel faces, the distance between which faces is the shortest axis of the core, and having an $SiO_x$ layer applied to those parallel faces and, optionally, further layers. The further layers may be applied to the parallel faces or to the entire surface.

The pigments are prepared according to the methods described in EP-B-803549 and PCT/EP03/09296. The comminution and classification of the pigments is carried out by means of conventional methods, for example ultrasound, grinding using high-speed stirrers, air separation, sieving etc..

The thickness of the $SiO_x$ layer is generally from 5 to 200 nm, preferably from 5 to 100 nm. The thickness of the $SiO_2$ layer is generally from 1 to 500 nm, preferably from 100 to 350 nm.
The thickness of the layer (a4), especially a $TiO_2$ layer, is generally from 1 to 200 nm, preferably from 10 to 150 nm.

By using the pigments described in EP-B-803549 and PCT/EP03/09296 in ink compositions, it is possible to obtain ink compositions having a metallic appearance or having a colour that changes according to the viewing angle ("flop effect").

Preferably, the $SiO_x$ layers, $SiO_2$ layers and layers (a4) arranged in mirror image to the core, Al or $SiO_2$, in each case have the same layer thickness. In a further arrangement of the invention, the supporting layer may be surrounded on both sides by metal oxides that have a different layer thickness.

The present invention relates also to aqueous ink compositions in which the pigments used are those described in PCT/EP03/02196. That is to say, there are used in the compositions pigments that comprise

(a) a core substantially consisting of one or more silicon oxides ($SiO_x$), wherein the average molar ratio of oxygen to silicon is from 0.03 to < 0.95,
(b) optionally, an $SiO_z$ layer wherein $0.95 \leq z \leq 2.0$, especially $1.1 \leq z \leq 2.0$, more especially $1.4 \leq z \leq 2.0$, especially an $SiO_2$ layer,
(c) optionally, a layer $D^M$ having a transparency of from 50 to 100% and a complex refractive index $\tilde{N} = n + ik$ satisfying the condition $\sqrt{n^2+k^2} \geq 1.5$ at the wavelength of maximum visible reflection of the particles, which is substantially composed of carbon, an organic compound, a metal, a dielectric or a mixture thereof, and which is either on top of the core or, if an $SiO_z$ layer is present, is separated from the core by the $SiO_z$ layer.

In that embodiment, the invention is concerned with a pigment of which the particles have an average diameter of at least 2 μm, especially from > 2 to 20 μm, and more especially from 3 to 15 μm. The thickness of the pigments is generally from 20 nm to 1.5 μm, preferably from 200 to 500 nm, the particles having a core $SiO_x$ with two substantially parallel faces, the distance between which faces is the shortest axis of the core, and optionally having layers $SiO_z$ and/or $D^M$ applied to those parallel faces or to the entire surface, wherein

- the core $SiO_x$ has a thickness of from 20 to 350 nm and $0.03 \leq x < 0.95$;
- the $SiO_z$ layer, which is applied to the core, has a thickness of from 2 nm to 500 nm; and
- the layer $D^M$, which has a transparencey of from 50 to 100% and a complex refractive index $\tilde{N} = n + i\,k$ satisfying the condition $\sqrt{n^2+k^2} \geq 1.5$ at the wavelength of maximum visible reflection of the particles, has a thickness of from 5 nm to 300 nm.

The complex refractive index $\tilde{N}$ (CRC Handbook of Chemistry and Physics, 82nd Edition, pages 12-133) can be determined, for example, by ellipsometry (R. M. A. Azzam & N. M. Bashera, *Ellipsometry and Polarized Light,* North Holland, New Amsterdam 1997). The layers $SiO_z$ and/or $D^M$ are preferably arranged symmetrically about the core $S^D$, both with respect to their chemical composition and stoichiometry and to their thicknesses, having a plane of symmetry parallel to the plane of the greatest diameter. In addition to the optional layers $SiO_z$ and/or $D^M$, any desired further layers

may also be present. Preferably, the compositions according to the invention comprise particles having at least one layer $SiO_z$ or $D^M$, especially particles having at least one $SiO_z$ layer and especially also those having one $SiO_z$ layer and one layer $D^M$. Preference is accordingly given more especially to particles having the following layer sequences:

$SiO_z/SiO_x/SiO_z$, especially $SiO_2/SiO_x/SiO_2$ and $D^M/SiO_z/SiO_x/SiO_z/D^M$, especially $D^M/SiO_2/SiO_x/SiO_2/D^M$.

The silicon in the core is generally bonded to from 3 to 95 atom % oxygen, especially to from 5 to 50 atom % oxygen, more especially from 10 to 30 atom % oxygen, per 100 atom % silicon. The thickness of the $SiO_z$ layer is at least equal to the thickness of the natural oxide layer of approximately 2 nm, and is preferably from 10 to 350 nm thick. The thickness of the layer $D^M$ is especially from 20 to 200 nm, and more especially from 30 to 100 nm.

Useful materials for the layer $D^M$ include, for example, metals such as Ag, Al, Au, Cu, Co, Cr, Fe, Ge, Mo, Nb, Ni, Si, Ti, V, alloys thereof, inorganic or organic pigments or colorants, graphite and compounds similar to graphite as disclosed in EP-A-982 376, metal oxides, such as $MoS_2$, $TiO_2$, $ZrO_2$, SiO, $SnO_2$, $GeO_2$, ZnO, $Al_2O_3$, $V_2O_5$, $Fe_2O_3$, $Cr_2O_3$, $PbTiO_3$ or CuO and also mixtures thereof. The layer $D^M$ may, however, also consist, for example, of any one of the many dielectric materials whose specific resistivity according to the conventional definition is at least $10^{10}$ $\Omega \cdot cm$, which are likewise very well known to the person skilled in the art. The transparency of the layer $D^M$ is advantageously at least 50 %, corresponding to a reflectivity of at most 50 %. With a metal, the skilled person will know how to achieve this by means of appropriately thin layers, for example up to approximately 3 nm of Al or Au or up to approximately 10 nm of Co or Cu. In the case of colourless or coloured dielectrics greater thicknesses are possible.

Silicon oxides having a less-than-equimolar oxygen content ($SiO_x$ wherein $0.03 \leq x < 0.95$, especially $0.03 \leq x \leq 0.5$, more especially $0.1 \leq x \leq 0.3$) have astonishingly high stability to oxidation along with a high refractive index, even in thin layers. Hydrolysis or heating in the presence of oxygen at from 150 to 500°C, preferably from 200 to 300°C, unexpectedly results in a very thin, for example approximately 20 nm thick, superficial silicon dioxide layer, which is a very convenient method of producing structures having the layer sequence $SiO_2/SiO_x/SiO_2$. If thicker silicon dioxide layers are desired, they can conveniently be produced analogously to the method of the second implementation example of WO00/43565 by means of vapour-deposition of silicon monoxide and subsequent heat-treatment. It is advantageous therein that the layer of silicon oxide lying underneath the silicon monoxide and having a less-than-equimolar oxygen content remains unchanged. Further layers may subsequently be applied to structures having the layer sequence $SiO_2/SiO_xSiO_2$, for example in order to obtain $D^M/SiO_2/SiO_x/SiO_2/D^M$, which may be produced especially conveniently by wet-chemical application of a layer $D^M$ onto structures having the layer sequence $SiO_2/SiO_x/SiO_2$.

For vapour-depositing the core there is advantageously used metallic silicon, which need not be of high purity. That is to say, impurities may be present, for example elements of the main groups 13, 14 and 15 and/or transition elements such as Fe, Al, Ge, Sn and/or Sb.

The layers $SiO_z$ or $D^M$ may, for example, be produced by vapour-deposition in like manner, in which case - for symmetrical structures - vapour-deposition commences with the layer $D^M$ or $SiO_z$ onto which the core and then a further layer $SiO_z$ or $D^M$ are vapour-deposited. When layers $SiO_z$ and $D^M$ are both desired, the procedure is, for example, as described hereinbefore.

According to that embodiment, special preference is given to pigments having the following layer structure:

(b2) $SiO_z$ layer, especially $SiO_2$ layer,
(b1) $SiO_x$ core wherein $0.03 \leq x < 0.95$,
(b2) $SiO_z$ layer, especially $SiO_2$ layer, or
(b3) layer $D^M$, especially $TiO_2$,
(b2) $SiO_z$ layer, especially $SiO_2$ layer,
(b1) $SiO_x$ core wherein $0.03 \leq x < 0.95$,
(b2) $SiO_z$ layer, especially $SiO_2$ layer,
(b3) layer $D^M$, especially $TiO_2$.

The materials for the layer $D^M$ are generally selected from metals, such as Ag, Al, Au, Cu, Co, Cr, Fe, Ge, Mo, Nb, Ni, Si, Ti, V, alloys thereof, inorganic or organic pigments or colorants, graphite and compounds similar to graphite, metal oxides such as $MOS_2$, $TiO_2$, $ZrO_2$, SiO, $SnO_2$, $GeO_2$, ZnO, $Al_2O_3$, $V_2O_5$, $Fe_2O_3$, $Cr_2O_3$, $PbTiO_3$ or CuO, and mixtures thereof. The layer $D^M$ preferably consists of $TiO_2$.

In high-value applications, for example automotive finishes, it is possible, for example, for the weathering resistance to be increased by means of an additional protective layer, from 2 to 250 nm thick (preferably from 10 to 100 nm thick), of an inorganic dielectric of $n_D \leq 1.6$ (such as $SiO_2$, $SiO(OH)_2$ etc.).

The platelet-shaped particles of the present invention are known or can be prepared in analogy to known processes: DE-A-19844357, EP-A-990715, US-B-5,135,812, US-B-6,270,840, WO93/08237, WO00/18978, WO01/57287, EP-A-803549, PCT/EP03/02196 and PCT/EP03/09296.

The platelet-shaped particles can be used on their own or in combination with organic and inorganic pigments and colorants. When, for example, flakes having the structure $SiO_x$(45 nm)/$SiO_z$(240 nm)/$SiO_x$(45 nm) (x=0.3 +/- 10%) (z = 1 +/- 10%) and a black colorant, for example IRGASPERSE® Black R-W (Ciba Spezialitätenchemie AG), are used to produce an ink composition, then if the ink is applied to an absorbent paper, a brilliant light-blue colouration with flop to red is obtained.

The ink compositions according to the invention generally contain from 0.1 to 20 % by weight, preferably from 0.2 to 10 % by weight, of pigment (or colorant).

As component (B), the ink compositions according to the invention comprise customary dispersants, for example water-soluble dispersants based on one or more condensation products of arylsulfonic acid and formaldehyde (B1) or on one or more water-soluble alkoxylated phenols (B2), non-ionic dispersants (B3) or polymeric acids (B4).
The dispersants (B1) to which preference is given are condensation products having a maximum sulfonic acid group content of 40 % by weight.
The condensation products (B1) are obtainable by sulfonation of aromatic compounds, such as naphthalene itself or naphthalene-containing mixtures, and subsequent condensation with formaldehyde of the arylsulfonic acids formed.
Arylsulfonic acids that are especially suitable usually comprise α- and β-naphthalenesulfonic acids in which the ratio of the α-isomer to the β-isomer is usually from 20 : 1 to 1 : 8, especially 10 : 1 to 1 : 5.
As the added carboxylic acid there are suitable aromatic carboxylic acids or derivatives thereof, such as naphthalenecarboxylic acid, naphthalic acid, terephthalic acid, isophthalic acid, benzoic acid, trimellitic acid, phenylacetic acid, phenoxyacetic acid, salicylic acid, p-hydroxybenzoic acid, diphenylacetic acid, m-hydroxybenzoic acid, benzenetetracarboxylic acid and acid anhydrides, such as phathalic anhydride, trimellitic anhydride, benzene-1,2,4,5-tetracarboxylic dianhydride or naphthalic anhydride.
Suitable long-chained aliphatic carboxylic acids are especially saturated or olefinically unsaturated, linear or branched aliphatic monocarboxylic acids having from 8 to 22, preferably from 8 to 18, carbon atoms of natural or synthetic origin, for example higher fatty acids, such as caprylic acid, capric acid, lauric acid, myristic acid, palmitic acid, stearic acid, oleic acid, linoleic acid or linolenic acid or synthetically produced carboxylic acids, such as 2-ethylhexanoic acid, isononanoic acid or isotridecanoic acid.
Also of interest are mixtures of anhydrides, mixtures of carboxylic acids, mixtures of salts of the carboxylic acids that come into consideration and also mixtures of carboxylic acids and anhydrides.
Special preference is given to sodium benzoate, sodium phenylacetate, sodium salicylate, sodium 4-hydroxybenzoate, sodium terephthalate, sodium 2-hydroxy-3-naphthalenecarboxylate, naphthalene-1-carboxylic acid, phthalic anhydride or benzoic acid.
Dispersants (B1) especially preferred for the ink compositions according to the invention contain
from 50 to 97 % by weight, especially from 70 to 95 % by weight, arylsulfonic acid/formaldehyde condensation products and from 3 to 50 % by weight, especially from 5 to 30 % by weight, aromatic or long-chained aliphatic carboxylic acids, their salts or their anhydrides, or mixtures thereof.

The dispersants (B1) are known and are described, for example, in US-A-5,186,846 and DE-A-19727767.
As dispersants (B2) preference is given to alkoxylated phenols of formula I or II

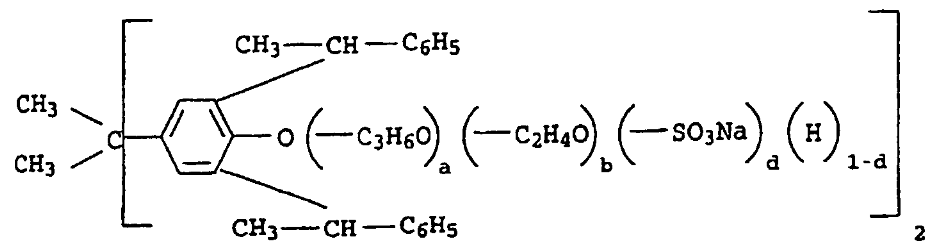

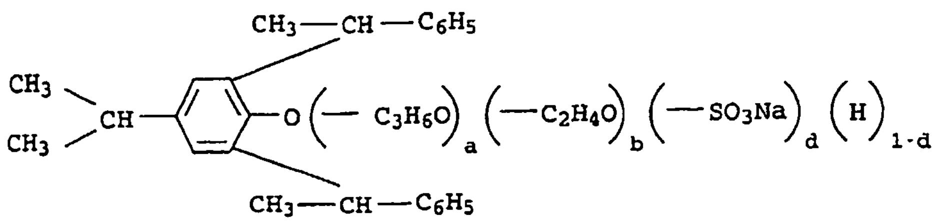

wherein
a is from 0 to on average 125,
b is on average from 37 to 250, wherein when b>37 the ratio of b : a is at least 1:1, and
dis 0 or 1,
or mixtures thereof.
Preference is given to dispersants (B2) wherein a is from 0 to on average 2.5, b is on average from 37 to 250 and d is from 0 to on average 0.5. Special preference is given to dispersants (B2) in which a is from 0 to on average 2.5, b is from on average 50 to 100 and d is on average 0.5.
The dispersants (B2) are known and are described, for example, in US-B-4,218,218 and DE-A-19727767.

Suitable non-ionic dispersants (B3) are especially compounds selected from the group of the

- alkylene oxide adducts of formula

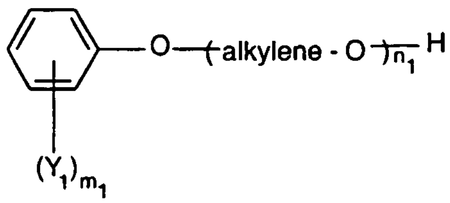

(10)

wherein $Y_1$ is $C_1$-$C_{12}$alkyl, aryl or aralkyl,
"alkylene" is an ethylene radical or propylene radical and
$m_1$ is from 1 to 4 and $n_1$ is from 4 to 50,

- adducts of alkylene oxide with saturated or unsaturated mono- to hexa-hydric aliphatic alcohols, fatty acids, fatty amines, fatty amides, diamines, or sorbitan esters,
- alkylene oxide condensation products (block polymers)
- polymerisation products of vinylpyrrolidone, vinyl acetate or vinyl alcohol and
- co- or ter-polymers of vinylpyrrolidone with vinyl acetate and/or vinyl alcohol.

Preferred alkylene oxide adducts are

- an alkylene oxide addition product of from 1 to 100 mol of alkylene oxide, e.g. ethylene oxide and/or propylene oxide, with 1 mol of an aliphatic monoalcohol having at least 4 carbon atoms, of a tri- to hexa-hydric aliphatic alcohol, or of a phenol unsubstituted or substituted by alkyl, phenyl, $\alpha$-tolylethyl, benzyl, $\alpha$-methylbenzyl or by $\alpha,\alpha$-dimethylbenzyl;
- an alkylene oxide addition product of from 1 to 100 mol, preferably from 2 to 80 mol, of ethylene oxide, wherein individual ethylene oxide units may have been replaced by substituted epoxides, such as styrene oxide and/or propylene oxide, with higher unsaturated or saturated monoalcohols, fatty acids, fatty amines or fatty amides having from 8 to 22 carbon atoms;
- an alkylene oxide addition product, preferably an ethylene oxide/propylene oxide adduct with ethylenediamine;
- an ethoxylated sorbitan ester having long-chained ester groups, for example polyoxyethylene/sorbitan monolaurate having from 4 to 20 ethylene oxide units or polyoxyethylene/sorbitan trioleate having from 4 to 20 ethylene oxide units.

Preferred alkylene oxide condensation products are adducts of ethylene oxide with polypropylene oxide (so-called EO-PO block polymers) and adducts of propylene oxide with polyethylene oxide (so-called reverse EO-PO block polymers).

Special preference is given to ethylene oxide-propylene oxide block polymers in which the molecular weight of the polypropylene oxide base is from 1700 to 4000 and in which the ethylene oxide content in the total molecule is from 30 to 80%, especially from 60 to 80%.

An especially preferred embodiment of the present invention employs polymeric acids (B4), which function both as dispersants and as binders. Examples of such compounds are listed below:

(a) polyacrylic acid and copolymers ("copol") thereof, such as copol. (styrene/acrylic acid), copol. (ethyl acrylate/acrylic acid), copol. (ethylene/vinyl acetate/acrylic acid), copol. (MMA/H EGAc/acrylic acid), copol. (styrene/MMA/acrylic acid), copol. (styrene/MMA/PEGAc/acrylic acid);

(b) polymethacrylic acid and copolymers thereof, such as copol. (styrene/methacrylic acid), copol. (ethyl acrylate/methacrylic acid), copol. (ethylene/vinyl acetate/methacrylic acid), copol. (MMA/HA/EGAc/methacrylic acid), copol. (benzyl methacrylate/triethylene glycol/methacrylic acid), copol. (styrene/MMA/methacrylic acid), copol. (styrene/MMA/PEGAc/methacrylic acid);
(c) styrene-maleic acid copolymers, styrene-maleic anhydride copolymers; and also
(d) polyvinylbenzoic acid (PVBA) and copolymers thereof, such as copol. (MMA/HA/vinylbenzoic acid), copol. (MMA/HA/PEGAc/vinylbenzoic acid) and copol. (MMA/EA/PEGAc/vinylbenzoic acid) (see, for example, US-B-6 417 249).

A large number of polymeric acids are available commercially. Examples include the polymeric acids obtainable from BYK Chemie Co. under the trade names Disperbyk® 110, 111, 180, 181, 182, 183, 184 and 190 and BYK 380 and 381. Further polymeric acids are obtainable from Zeneca Co. under the trade names Neocryl® BT175, BT520, TX-K 14, A6037, XK12, K990 and BT44.

In that embodiment, the aqueous ink composition comprises

a) metallic or non-metallic, inorganic platelet-shaped particles,
b) a polymeric acid, especially Disperbyk® 190, which functions both as a dispersant and as a binder.

The ink compositions according to the invention generally contain from 0.1 to 20 % by weight, preferably from 0.5 to 10 % by weight, of dispersant (B).

The pigment preparations according to the invention contain as component (C) a binder that is preferably curable by radiation. According to the invention, such binders are those which are curable by high-energy radiation, that is, electromagnetic radiation especially of from 220 to 450 nm (UV radiation) or electron beams. Both free-radically polymerisable and cationically polymerisable binder components and also mixtures thereof are suitable. Such binder systems are generally known and are described, for example, in Chemistry & Technology of UV & EB Formulation for Coatings, Inks & Paints, SITA Technology, London (1991), in The Printing Ink Manual, Fourth Edition, Van Nostrand Reinhold (International), London (1989), UV & EB Curing Formulation for Printing Inks and Paints, SITA Technology, London (1984) and in the company paper Vinyl Ethers, The Innovative Challenge, BASF Aktiengesellschaft (1997).

Acrylate group-containing, vinyl group-containing and/or epoxy group-containing monomers, prepolymers and polymers and mixtures thereof may be mentioned as examples of suitable binder components (C).

Acrylate group-containing binder components (C) are especially acrylate-based or methacrylate-based prepolymers, acrylate compounds being especially suitable. Preferred (meth)acrylate compounds generally contain from 2 to 20, especially from 2 to 10 and more especially from 2 to 6, copolymerisable, ethylenically unsaturated double bonds. The average molecular weight (number average) of the (meth)acrylate compounds is preferably 15 000, especially below ≤ 5000, and more especially from 180 to 3000 g/mol (determined by gel permeation chromatography using polystyrene as standard and tetrahydrofuran as 1 eluant).

As (meth)acrylate compounds there may be mentioned, for example, (meth)acrylates and especially acrylates of polyhydric alcohols, especially those which, apart from containing hydroxyl groups, contain no further functional groups or possibly contain ether groups. Examples of such alcohols are dihydric alcohols, such as ethylene glycol, propylene glycol and the higher condensed representatives thereof, for example diethylene glycol, triethylene glycol, dipropylene glycol and tripropylene glycol, butanediol, pentanediol, hexanediol, neopentyl glycol, alkoxylated phenolic compounds, such as ethoxylated and propoxylated bisphenols, cyclohexanedimethanol, trihydric alcohols and alcohols of higher valency, such as glycerol, trimethylolpropane, butanetriol, trimethylolethane, pentaerythritol, ditrimethylolpropane, dipentaerythritol, sorbitol, mannitol and the corresponding alkoxylated alcohols, especially ethoxylated and propoxylated alcohols.

Further (meth)acrylate compounds that may be mentioned are polyester (meth)acrylates, which are the (meth) acrylates of polyesterols; they may be saturated or unsaturated. The polyesterols that come into consideration are, for example, those which can be prepared by esterification of polycarboxylic acids, preferably dicarboxylic acids, with polyols, preferably diols.

Polyester (meth)acrylates can be prepared in a plurality of steps or in one step, as described in EP-A-279303, from (meth)acrylic acid, polycarboxylic acid and polyol.

The acrylate compounds may furthermore be epoxy or urethane (meth)acrylates. Epoxy (meth)acrylates include, for example, those obtainable by reaction of epoxidised olefins or mono-, di- or poly-glycidyl ethers, such as diglycidyl ether of bisphenol A, with (meth)acrylic acid. Urethane (meth)acrylates are especially reaction products of hydroxyalkyl (meth) acrylates with poly- or di-isocyanates. Mention may also be made of melamine acrylates and silicone acrylates.

The acrylate compounds may also have been non-ionically modified (for example provided with amino groups) or ionically modified (for example provided with acid groups or ammonium groups) and may be used in the form of aqueous dispersions or emulsions (for example EP-A-704469, EP-A-12339).

Furthermore, the solventless acrylate polymers can be mixed with so-called reactive diluents to obtain the desired viscosity.

Suitable reactive diluents include, for example, vinyl group-containing monomers, especially N-vinyl compounds, such as N-vinylpyrrolidone, N-vinylcaprolactam and N-vinylformamide and vinyl ethers, such as ethyl, propyl, isopropyl, butyl, isobutyl, tert-butyl, amyl, 2-ethylhexyl, dodecyl, octadecyl and cyclohexyl vinyl ether, ethylene glycol mono- and di-vinyl ether, di-, tri- and tetra-ethylene glycol mono- and di-vinyl ether, polyethylene glycol divinyl ether, ethylene glycol butylvinyl ether, triethylene glycol methylvinyl ether, polyethylene glycol methylvinyl ether, butanediol mono- and di-vinyl ether, hexanediol mono- and di-vinyl ether, cyclohexanedimethanol mono- and di-vinyl ether, trimethylolpropane trivinyl ether, aminopropylvinyl ether, diethylaminoethylvinyl ether and polytetrahydrofuran divinyl ether, vinyl esters, such as vinyl acetate, vinyl propionate, vinyl stearate and vinyl laurate, and aromatic vinyl compounds, such as vinyltoluene, styrene, 2- and 4-butylstyrene and 4-decylstyrene, as well as acrylate-containing monomers, such as phenoxyethyl acrylate, tert-butylcyclohexyl acrylate, hexanediol diacrylate, tripropylene glycol diacrylate and trimethylolpropane triacrylate.

It is also possible for vinyl group-containing compounds to be used directly as cationically polymerisable binder component (C).

Other suitable binder components (C) are epoxy group-containing compounds, such as cyclopentene oxide, cyclohexene oxide, epoxidised polybutadiene, epoxidised soybean oil, (3',4'-epoxycyclohexylmethyl)-3,4-epoxycyclohexanecarboxylate and glycidyl ethers, for example butanediol diglycidyl ether, hexanediol diglycidyl ether, diglycidyl ether of bisphenol A and pentaerythritol diglycidyl ether, the concomitant use of cationically polymerisable monomers, for example unsaturated aldehydes and ketones, dienes, such as butadiene, aromatic vinyl compounds, such as styrene, N-substituted vinylamines, such as vinyl carbazole, and cyclic ethers, such as tetrahydrofuran, likewise being possible.

The pigment preparations according to the invention generally contain from 0.1 to 20 % by weight, preferably from 1 to 15 % by weight, of binder component (C).

The pigment preparations according to the invention may furthermore comprise, especially when curing of the binder is to be effected by UV radiation, a photoinitiator (D) which initiates polymerisation.

Photoinitiators suitable for free-radical photopolymerisation procedures, that is the polymerisation of acrylates and, if desired, vinyl compounds, include, for example, benzophenone and benzophenone derivatives, such as 4-phenylbenzophenone and 4-chlorobenzophenone, acetophenone derivatives, such as 1-benzoylcyclohexan-1-ol, 2-hydroxy-2,2-dimethylacetophenone and 2,2-dimethoxy-2-phenylacetophenone, benzoin and benzoin ethers, such as methyl, ethyl and butyl benzoin ether, benzil ketals, such as benzil dimethyl ketal, 2-methyl-1-[4-(methylthio)phenyl]-2-morpholinopropan-1-one, acylphosphine oxides, such as 2,4,6-trimethylbenzoyldiphenylphosphine oxide and bisacylphosphine oxides.

Photoinitiators suitable for cationic photopolymerisation procedures, that is the polymerisation of vinyl compounds or epoxy group-containing compounds, include, for example, aryldiazonium salts, such as 4-methoxybenzenediazonium hexafluorophosphate, benzenediazonium tetrafluoroborate and toluenediazonium tetrafluoroarsenate, aryliodonium salts, such as diphenyliodonium hexafluoroarsenate, arylsulfonium salts, such as triphenylsulfonium hexafluorophosphate, benzene- and toluene-sulfonium hexafluorophosphate and bis[4-diphenylsulfonio-phenyl]sulfide bishexafluorophosphate, disulfones, such as diphenyl disulfone and phenyl 4-tolyl disulfone, diazodisulfones, imidotriflates, benzoin tosylates, isoquinolinium salts, such as N-ethoxyisoquinolinium hexafluorophosphate, phenylpyridinium salts, such as N-ethoxy-4-phenylpyridinium hexafluorophosphate, picolinium salts, such as N-ethoxy-2-picolinium hexafluorophosphate, ferrocenium salts and titanocenes.

When a photoinitiator (D) is present in the ink compositions according to the invention, which is usually necessary when curing of the binder is by UV rays, then the content thereof is generally from 0.1 to 10 % by weight, preferably from 0.1 to 8 % by weight. Water is the chief component (E) of the ink compositions according to the invention. Its content is generally from 35 to 90 % by weight, preferably from 45 to 80 % by weight.

The ink compositions according to the invention may comprise, as additional component (F), an agent having a water-retaining action (humectant), which makes it especially suitable for the ink-jet method.

There are suitable, as component (F), polyhydric alcohols, preferably unbranched and branched $C_3$-$C_8$alkanols, such as ethylene glycol, diethylene glycol, triethylene glycol, tetraethylene glycol, propylene glycol, dipropylene glycol, glycerol, erythritol, pentaerythritol, pentitols, such as arabitol, adonitol and xylitol, and hexitols, such as sorbitol, mannitol and dulcitol, with special preference being given to the $C_3$-$C_6$alkanols, especially sorbitol. Poyalkylene glycols, which are also to be understood as including the lower (di-, tri- and tetra-)alkylene glycols, are also suitable as component (F). Preference is given to polyalkylene glycols having average molecular weights of from 100 to 1500, with special preference being given to polyethylene glycols having an average molecular weight of $\leq 800$.

Preferred ink compositions according to the invention comprise, as component (F), a combination of polyhydric alcohol and polyalkylene glycol generally in an amount of from 0.1 to 35 % by weight, especially from 5 to 25 % by weight, based on the weight of the preparation.

There are furthermore suitable, for maintaining the fluidity of the pigment preparations according to the invention, water-soluble solvents that do not readily vaporise, such as N-methylpyrrolidone, 2-pyrrolidone and ethoxylation products of

glycerol and pentaerythritol, which may be added in amounts of from 0 to 15 % by weight.

The ink compositions of the present invention may comprise, as further component (G), a wetting agent, especially a polymer of formula

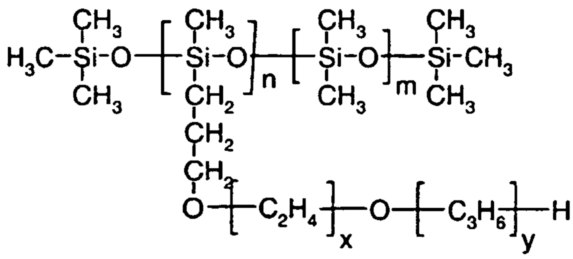

wherein m, n, x and y are each integers that indicate the number of repeating units. x is generally in the range from 8 to 60, especially from 10 to 50, and more especially in the range from 12 to 45. y is generally in the range from 2 to 20, especially in the range from 3 to 18, and most especially in the range from 5 to 16. The ratio of x:y is generally from 10:90 to 90:10, especially from 12:88 to 80:20 and more especially from 14:86 to 75:25. n is generally in the range from 3 to 60, especially from 4 to 40 and more especially from 5 to 30. m is generally in the range from 10 to 98, especially from 15 to 70 and more especially from 20 to 50. The ratio of n:m is generally from 2:98 to 10:90, especially from 3:97 to 15:85 and more especially from 5:95 to 20:80. The values of x, y, n and m are such that the polymer has a weight-average average molecular weight of from 1200 to 60 000, especially from 3000 to 55 000 and more especially from 6000 to 50 000. Polymers of the above formula are available commercially, for example TEGOPREN® 5883 and 5884 (Goldschmidt Chemical Corp., Hopewell, Va.), in which the ratio of ethylene oxide to propylene oxide is approximately 77:23 (weight), the ratio of n:m is approximately 1:6, and the weight-average molecular weight is approximately 50 000, TEGOPREN® 5851, 5863, 5852, 5857 and SILWET® L-7210, L-7220, L-7230, L-7002, L-7500, L-7001, L-7200, L-7280 and L-7087 (Witco Corp., Greenwich, Conn.).

The polymer may be added in amounts of from 0.2 to 3 % by weight, especially from 0.3 to 2 % by weight, more especially from 0.5 to 1.5 % by weight, based on the weight of the ink composition (US-B-6,124,376).

It will be understood that the pigment preparations according to the invention may comprise further adjuvants, such as are customary especially for (aqueous) ink-jet inks and in the printing and coatings industry. There may be mentioned, for example, preservatives (such as glutardialdehyde and/or tetramethylol acetyleneurea, antioxidants, degassers/defoamers, viscosity regulators, flow improvers, anti-settling agents, gloss improvers, lubricants, adhesion promoters, anti-skin agents, matting agents, emulsifiers, stabilisers, hydrophobic agents, light-stabilising additives, handle improvers and antistatics. The total amount of such substances as a component of the pigment preparations according to the invention is generally ≤ 1 % by weight, based on the weight of the preparation.

The viscosity of the ink compositions according to the invention is usually from 1 to 20 mPa s, preferably from 2 to 5 mPa s. The surface tension of the pigment preparations according to the invention is generally from 20 to 70 mN/m. The pH value of the ink compositions according to the invention is generally from 5 to 11, preferably from 6 to 8.

The ink compositions according to the invention are suitable for use in recording systems in which the ink is expressed in the form of droplets from a small aperture and directed onto a substrate, especially a planar substrate, on which an image is formed. Suitable recording systems include, for example, commercially available ink-jet printers for use in paper printing or textile printing.

The ink compositions according to the invention can be printed on any type of substrate material. As substrate materials there may be mentioned, for example:

- cellulose-containing materials, such as paper, pasteboard, cardboard, wood and wooden materials, which may also be lacquered or coated in some other way,
- metallic materials, such as foils, sheet metal or workpieces of aluminium, iron, copper, silver, gold, zinc or alloys of those metals, which may be lacquered or coated in some other way,
- silicate materials, such as glass, porcelain and ceramics, which may likewise be coated,
- polymeric materials of any kind, such as polystyrene, polyamides, polyesters, polyethylene, polypropylene, melamine resins, polyacrylates, polyacrylonitrile, polyurethanes, polycarbonates, polyvinyl chloride and corresponding copolymers and block copolymers,
- textile materials, such as fibres, yarns, twisted yarns, knitted goods, wovens, non-wovens and made-up goods of polyester or of modified polyester, polyester blends, cellulose-containing materials, such as cotton, cotton blends, jute, flax, hemp and ramie, viscose, wool, silk, polyamide, polyamide blends, polyacrylonitrile, triacetate, acetate, polycarbonate, polypropylene, polyvinyl chloride, polyester microfibres and glass fibre fabrics,

- leathers, both natural leather and synthetic leather, in the form of smooth-finished leather, nappa leather or velour leather,
- foodstuffs and cosmetics.

As examples of paper that can be printed with the inks according to the invention there may be mentioned commercially available ink-jet paper, photo paper, glossy paper, plastics-coated paper, e.g. Epson Ink-jet Paper, Epson Photo Paper, Epson Glossy Paper, Epson Glossy Film, HP Special Ink-jet Paper, Encad Photo Gloss Paper and Ilford Photo Paper. Plastics films that can be printed with the inks according to the invention are, for example, transparent or cloudy/opaque. Suitable plastics films are, for example, 3M Transparency Film. Preference is given to glossy paper, such as, for example, Epson Glossy Paper.
As textile fibre materials there come into consideration especially nitrogen-containing or hydroxy group-containing fibre materials, for example woven textile fabric made of cellulose, silk, wool or synthetic polyamides, especially silk.
In the case of the ink-jet printing method, individual droplets of ink are sprayed onto a substrate from a nozzle in a controlled manner. It is mainly the continuous ink-jet method and the drop-on-demand method that are used for that purpose. In the case of the continuous ink-jet method, the droplets are produced continuously, droplets not required for the printing operation being discharged into a receptacle and recycled. In the case of the drop-on-demand method, on the other hand, droplets are generated as desired and used for printing; that is to say, droplets are generated only when required for the printing operation.
The production of the droplets can be effected, for example, by means of a piezo ink-jet head or by thermal energy (bubble jet). For the process according to the invention, printing by means of a piezo ink-jet head is preferred, but preference is given also to printing according to the continuous ink-jet method.
Subsequent curing of the binder, that is fixing the print, can be carried out in customary manner by the application of heat or high-energy radiation. For that purpose the print is irradiated either under an inert gas atmosphere (e.g. nitrogen) with electrons (electron beam curing) or with high-energy electromagnetic radiation, preferably in a wavelength range of from 220 to 450 nm. The light intensities selected should be adapted to the curing rate in order to avoid degradation of the colorant. With a lamp output of from 120 to 240 W/cm, the curing rate may be, for example, up to 100 m/min, depending on the concentration and the nature of the photoinitiator.
The ink compositions according to the invention are distinguished, as ink-jet inks, by advantageous application properties overall, especially good flow behaviour, and yield prints having a high degree of fastness to light and to water.
The ink-jet-inks of the present invention comprising effect pigments, are also useful for providing visible, non-copyable markings on documents to denote that they are original documents. "Non-copyable" shall mean that upon conventional copying techniques such as photocopying, scanning and reprinting, color-copying, and the like, a given property cannot be copied and impart the same property in substantially the same way. For example, if a marking or image has a property that reflects multi-colored light or has a directionally dependent light reflective property, upon color-copying, the copied marking or image will not impart the same property. Even if the image is scanned and printed using the same printer pen and ink, the pattern of the reflected light within the copy will inevitably be different as the exact pattern of reflective particulates will not be duplicated. Accordingly, the present invention is also directed to a method for marking a document as an original, comprising: providing an image-containing document that is to be marked as an original; and ink-jetting an aqueous ink-jet ink according to the present invention onto the document.
The following Examples serve to illustrate the invention. Unless stated otherwise, temperatures are given in degrees Celsius, parts are parts by weight and percentages are percentages by weight. The relationship between parts by weight and parts by volume is the same as that between kilograms and litres.

## Examples

### Example 1

A layer of approximately 50 nm of NaCl is vapour-deposited onto a metallic carrier in a vacuum chamber at a pressure of less than approximately $10^{-2}$ Pa at about 900°C. Then, at the same pressure, the following materials are successively vapour-deposited: SiO (as reaction product of Si and $SiO_2$ at from 1350 to 1550°C), Al (at 1400 to 1500°C) and SiO, whereby a film having the layer structure SiO/Al/SiO is produced on the metal belt. The separating agent is then dissolved in water, whereupon flakes come away from the substrate. At atmospheric pressure, the resulting suspension is concentrated by filtration and rinsed several times with deionised water in order to remove $Na^+$ and $Cl^-$ ions that are present. That is followed by the steps of drying and heating of the plane-parallel SiO/Al/SiO structures in the form of loose material at 500°C for two hours in an oven through which air heated to 500°C is passed. On heating of the platelets, the SiO layer is converted into an $SiO_2$ layer. After cooling, comminution and grading by air-sieving are carried out.

The resulting $SiO_2$(40 nm)/Al(100 nm)/$SiO_2$(40 nm) flakes are then ground to form particles having an average diameter of 10 μm, which is measured by means of electron microscopy.

The above-mentioned $SiO_2$(40 nm)/Al(100 nm)/$SiO_2$(40 nm) flakes are used to prepare an ink composition of the formulation indicated below:

| Component | Amount [g] |
|---|---|
| $SiO_2$(40 nm)/Al(100 nm)/$SiO_2$(40 nm) flakes | 0.13 |
| Tegopren® 5840 (Goldschmidt Chemical Corp., Hopewell, Va.) | 0.036 |
| Disberbyk® 190 (BYK Chemie Co.) | 0.709 |
| Glycerol | 2.045 |
| Water | 4.82 |

The ink can then be dispersed simply by shaking, since the $SiO_2$/Al/$SiO_2$ flakes are readily dispersible in water-based systems.

**Application Example 1**

The ink composition obtained in Example 1 is printed on a commercially available ink-jet paper using a drop-on-demand ink-jet printer. The prints have a metallic appearance.

By proceeding as indicated in Example 1 but using, instead of the $SiO_2$(40 nm)/Al(100 nm)/$SiO_2$(40 nm) flakes, the flakes listed in the Table below, there are likewise obtained prints having a metallic appearance, colour flop, a high colour brilliance and/or a high tinctorial strength.

| PCT/EP03/ 9296, Example | Flakes No. | Composition |
|---|---|---|
| 1a | C-1 | $SiO_{0.2}$(45 nm)/$SiO_2$(160 nm)/ $SiO_{0.2}$(45 nm) matt orange powder having a goniochromatic effect |
| 1b | C-2 | $SiO_{0.2}$(45 nm)/$SiO_2$(240nm)/$SiO_{0.2}$(45 nm) matt blue-green powder having a goniochromatic effect |
| 1c | C-3 | $SiO_{0.2}$(45 nm)/$SiO_2$(260nm)/$SiO_{0.2}$(45 nm) glossy blue-green powder having a goniochromatic effect |
| 1d | C-4 | $SiO_{0.2}$(45 nm)/$SiO_2$(280 nm)/$SiO_{0.2}$(45 nm) glossy green powder having a goniochromatic effect |
| 1e | C-5 | $SiO_{0.2}$(45 nm)/$SiO_2$(440 nm)/$SiO_{0.2}$(45 nm) glossy yellow-green powder having a goniochromatic effect |

| EP-B-803549, Example | Flakes No. | Composition |
|---|---|---|
| 35 | D-1 | $SiO_2$(100 nM)/$SiO_{0.41}$(100 nm)/Al(50 nm)/$SiO_{0.41}$(100 nm)/ $SiO_2$(100nm) brilliant yellow powder having a metallic effect |
| 37 | D-2 | $SiO_{0.82}$(100 nm)/Al(50 nm)/$SiO_{0.82}$(100 nm) matt orange powder having a metallic effect |

**Application Example 2**

Flakes having the structure $SiO_x$(45 nm)/SiOy(240 nm)/$SiO_x$(45 nm) with a maximum platelet diameter of 20 μm are used to prepare an ink composition of the formulation indicated below:

| Component | Amount [g] |
|---|---|
| $SiO_x$(45 nm)/$SiO_y$(240 nm)/$SiO_x$(45 nm) (x=0.3 +/- 10%) (y = 1 +/- 10%) | 0.150 |

(continued)

| Component | Amount [g] |
|---|---|
| Tegopren® 5840 | 0.030 |
| Disperbyk® 190 | 0.543 |
| IRGASPERSE® Black R-W[1)] | 2.816 |
| Water | 3.499 |
| [1)] Black, liquid, metal complex dye from Ciba Spezialitätenchemie AG | |

The effect pigment is dispersed for about 5 minutes with the aid of an ultrasound bath. The ink is applied to an absorbent paper, yielding a brilliant light-blue coloration with flop to red. The flakes, having a maximum platelet diameter of 20 μm, are obtained by sieving the flakes, obtained after grinding, by means of a vibratory sieving machine "Analysette 3", model PRO (Fritsch), using micro-precision sieves of 100 ∅ according to ISO 3310-3 with aperture sizes of 5 μm (bottom sieve) and 20 μm (top sieve). The size grade of the flakes is characterised by the mesh sizes of the top sieve (20 μm) and of the receiving sieve (5 μm).

**Application Example 3**

Flakes having the structure $SiO_2$(15 ± 5 nm)/Al(35 ± 5 nm)/ $SiO_2$(15 ± 5 nm) with an average particle diameter of 3 to 10 μm are used to prepare an ink composition of the formulation indicated below:

| Component | % by weight |
|---|---|
| $SiO_2$(15 ± 5 nm)/Al(35 ± 5 nm)/ $SiO_2$(15 ± 5 nm) | 1.37 |
| Tegopren® 5840 | 0.77 |
| Disperbyk® 190 | 2.73 |
| 2-Propanol | 5.69 |
| Betaine Hydrate | 3.66 |
| Glycerin | 15.96 |
| DF66® (Air Products Ltd.; antifoam additive on silicone basis) | 0.30 |
| 2-Pyrrolidone | 3.67 |
| Water | 65.85 |

The ink composition obtained is printed on a commercially available ink-jet paper using a drop-on-demand ink-jet printer. The prints have a metallic appearance.

**Claims**

**1.** An aqueous ink composition for the ink-jet printing method, which comprises

a) metallic or non-metallic, inorganic platelet-shaped particles having an average particle diameter of at least 2 μm, wherein the platelet-shaped particles are pigments that comprise
(a1) a core consisting of a substantially transparent or metallically reflecting material and
(a2) at least one coating substantially consisting of one or more silicon oxides ($SiO_x$ layer) wherein the average molar ratio of oxygen to silicon is from 0.03 to < 0,95, or wherein the platelet-shaped particles are aluminium flakes coated with $SiO_z$ wherein 0,95 ≤ z ≤ 2.0, especially 1.1 ≤ z ≤ 2.0, more especially 1.4 ≤ z ≤ 2.0,
b) a dispersant (dispersing agent) and
c) a binder,

**2.** An aqueous ink composition according to claim 1, wherein the pigment has the following layer structure:

(a3) $SiO_z$, especially $SiO_2$.
(a2) at least one coating substantially consisting of one or more silicon oxides wherein the average molar ratio of oxygen to silicon is from 0,03 to < 0,95,
(a1) a core consisting of a substantially transparent or metallically reflecting material, and
(a2) at least one coating substantially consisting of one or more silicon oxides wherein the average molar ratio of oxygen to silicon is from 0.03 to < 0.95,
(a3) $SiO_z$, especially $SiO_2$, or
(a4) a coating consisting of any desired solid material the composition of which is different from that of the coating (a3),
(a3) $SiO_z$, especially $SiO_2$,
(a2) at least one coating substantially consisting of one or more silicon oxides wherein the average molar ratio of oxygen to silicon is from 0.03 to < 0.95,
(a1) a core consisting of a substantially transparent or metallically reflecting material, and
(a2) at least one coating substantially consisting of one or more silicon oxides wherein the average molar ratio of oxygen to silicon is from 0.03 to < 0.95,
(a3) $SiO_z$, especially $SiO_2$,
(a4) a coating consisting of any desired solid material the composition of which is different from that of the coating (a3),

**3.** An aqueous ink composition according to claim 1, wherein the platelet-shaped particles are gloss pigments comprising

(a) a core substantially consisting of one or more silicon oxides ($SiO_x$ layer) wherein the average molar ratio of oxygen to silicon is from 0.03 to < 0.95,
(b) optionally, an $SiO_z$ layer, wherein $0,95 \le z \le 2.0$, especially $1.1 \le y \le 2.0$, more especially $1\text{-}4 \le y \le 2.0$, especially an $SiO_2$ layer,
(c) optionally, a layer $D^M$ having a transparency of from 50 to 100% and a complex refractive index $\tilde{N} = n + i\,k$ satisfying the condition $\sqrt{n^2 + k^2} \ge 1.5$ at the wavelength of maximum visible reflection of the particles, which is substantially composed of carbon, an organic compound, a metal, a dielectric or a mixture thereof, and which is either on top of the core or, if an $SiO_z$ layer is present, is separated from the core by the $SiO_z$ layer.

**4.** An aqueous ink composition according to claim 3, wherein the gloss pigment has the following layer structure: $SiO_x/SiO_z/SiO_x$, $SiO_2/SiO_x/SiO_2/SiO_x/SiO_2$, especially $SiO_2/SiO_x/SiO_z/SiO_x/SiO_2$, $SiO_x/Al/SiO_x$, $SiO_2/SiO_x/Al/SiO_x/SiO_2$, especially $SiO_2/SiO_x/Al/SiO_x/SiO_2$, $TiO_2/SiO_z/SiO_x/SiO_z/SiO_x/SiO_z/TiO_2$, especially $TiO_2/SiO_2/SiO_x/SiO_z/SiO_x/SiO_2/TiO_2$ or $TiO_2/SiO_2/SiO_x/Al/SiO_x/SiO_2/TiO_2$, especially $TiO_2/SiO_2/SiO_x/Al/SiO_x/SiO_2/TiO_2$, wherein $0,03 \le x < 0.95$ and $0,95 \le z \le 2.0$, especially $1.40 \le z \le 2.0$.

**5.** An aqueous ink composition according to claim 3, wherein the gloss pigment has the following layer structure:

(b2) $SiO_z$ layer, especially $SiO_2$ layer,
(b1) $SiO_x$ core wherein $0.03 \le x < 0.95$,
(b2) $SiO_z$ layer, especially $SiO_2$ layer, or
(b3) layer $D^M$, especially $TiO_2$,
(b2) $SiO_z$ layer, especially $SiO_2$ layer,
(b1) $SiO_x$ core wherein $0.03 \le x < 0.95$,
(b2) $SiO_z$ layer, especially $SiO_2$ layer,
(b3) layer $D^M$, especially $TiO_2$.

**6.** An aqueous ink composition according to claim 4, wherein the materials for the layer $D^M$ are selected from metals, such as Ag, Al, Au, Cu, Co, Cr, Fe, Ge, Mo, Nb, Ni, Si, Ti, V, alloys thereof, inorganic or organic pigments or colorants, graphite and compounds similar to graphite, metal oxides or sulfides, such as $MoS_2$, $TiO_2$, $ZrO_2$, SiO, $SnO_2$, $GeO_2$, ZnO, $Al_2O_3$, $V_2O_5$, $Fe_2O_3$, $Cr_2O_3$, $PbTiO_3$ or CuO, and mixtures thereof.

**7.** A process for printing a planar substrate according to the Ink-jet printing method, which comprises printing the substrate with an aqueous ink composition according to any one of claims 1 to 6.

**Patentansprüche**

1. Wässrige Tintenzusammensetzung für das Tintenstrahldruckverfahren, die umfasst

a) metallische oder nicht-metallische, anorganische plättchenförmige Teilchen mit einem mittleren Teilchendurchmesser von mindestens 2 $\mu$m, wobei die plättchenförmigen Teilchen Pigmente darstellen, die umfassen

(a1) einen Kern, bestehend aus einem im Wesentlichen transparenten oder metallisch reflektierenden Material, und
(a2) mindestens eine Beschichtung, die im Wesentlichen aus einem oder mehreren Siliziumoxiden ($SiO_x$-Schicht) besteht, wobei das mittlere Molverhältnis von Sauerstoff zu Silizium 0,03 bis < 0,95 ist, oder wobei die plättchenförmigen Teilchen Aluminiumflocken, beschichtet mit $SiO_z$, sind, worin $0,95 \leq z \leq 2,0$, insbesondere $1,1 \leq z \leq 2,0$, vor allem $1,4 \leq z \leq 2,0$,

b) ein Dispersionsmittel (dispergierendes Mittel) und
c) ein Bindemittel.

2. Wässrige Tintenzusammensetzung nach Anspruch 1, worin das Pigment die nachstehende Schichtstruktur aufweist:

(a3) $SiO_z$, insbesondere $SiO_2$,
(a2) mindestens eine Beschichtung, die im Wesentlichen aus einem oder mehreren Siliziumoxiden besteht, wobei das mittlere Molverhältnis von Sauerstoff zu Silizium 0,03 bis < 0,95 ist,
(a1) einen Kern, bestehend aus einem im Wesentlichen transparenten oder metallisch reflektierenden Material, und
(a2) mindestens eine Beschichtung, die im Wesentlichen aus einem oder mehreren Siliziumoxiden besteht, wobei das mittlere Molverhältnis von Sauerstoff zu Silizium 0,03 bis < 0,95 ist,
(a3) $SiO_z$, insbesondere $SiO_2$, oder
(a4) eine Beschichtung, die aus beliebigem gewünschtem festem Material besteht, wobei die Zusammensetzung davon sich von jener der Beschichtung (a3) unterscheidet,
(a3) $SiO_z$, insbesondere $SiO_2$,
(a2) mindestens eine Beschichtung, die im Wesentlichen aus einem oder mehreren Siliziumoxiden besteht, wobei das mittlere Molverhältnis von Sauerstoff zu Silizium 0,03 bis < 0,95 ist,
(a1) einen Kern, bestehend aus einem im Wesentlichen transparenten oder metallisch reflektierenden Material, und
(a2) mindestens eine Beschichtung, die im Wesentlichen aus einem oder mehreren Siliziumoxiden besteht, worin das mittlere Molverhältnis von Sauerstoff zu Silizium 0,03 bis < 0,95 ist,
(a3) $SiO_z$, insbesondere $SiO_2$,
(a4) eine Beschichtung, die aus beliebigem gewünschtem festem Material besteht, wobei die Zusammensetzung davon sich von jener der Beschichtung (a3) unterscheidet.

3. Wässrige Tintenzusammensetzung nach Anspruch 1, worin die plättchenförmigen Teilchen Glanzpigmente darstellen, umfassend

(a) einen Kern, der im Wesentlichen aus einem oder mehreren Siliziumoxiden ($SiO_x$-Schicht) besteht, wobei das mittlere Molverhältnis von Sauerstoff zu Silizium 0,03 bis < 0,95 ist,
(b) gegebenenfalls eine $SiO_z$-Schicht, worin $0,95 < z < 2,0$, insbesondere $1,1 \leq y \leq 2,0$, vor allem $1,4 \leq y \leq 2,0$, insbesondere eine $SiO_2$-Schicht,
(c) gegebenenfalls eine Schicht $D^M$ mit einer Transparenz von 50 bis 100 % und einem komplexen Brechungsindex N = n + ik, die der Bedingung $\sqrt{n^2 + k^2} \geq 1,5$ bei der Wellenlänge der maximalen sichtbaren Reflexion der Teilchen genügt, die im Wesentlichen aus Kohlenstoff, einer organischen Verbindung, einem Metall, einem Dielektrikum oder einem Gemisch davon zusammengesetzt ist, und die entweder auf dem Oberen von dem Kern, oder, wenn eine $SiO_z$-Schicht vorliegt, getrennt von dem Kern durch die $SiO_z$-Schicht vorliegt.

4. Wässrige Tintenzusammensetzung nach Anspruch 3, worin das Glanzpigment die nachstehende Schichtstruktur aufweist: $SiO_x$ / $SiO_z$ / $SiO_x$, $SiO_z$ / $SiO_x$ / $SiO_z$ / $SiO_x$ / $SiO_z$, insbesondere $SiO_z$ / $SiO_x$ / $SiO_z$ / $SiO_x$ / $SiO_2$, $SiO_x$ / Al / $SiO_x$, $SiO_z$ / $SiO_x$ / Al / $SiO_x$ / $SiO_z$, insbesondere $SiO_2$ / $SiO_x$ / Al / $SiO_x$ / $SiO_z$, $TiO_2$ / $SiO_z$ / $SiO_x$ / $SiO_z$ / $SiO_x$

/ $SiO_z$ / $TiO_2$, insbesondere $TiO_2$ $SiO_2$ / $SiO_x$ / $SiO_z$ / $SiO_x$ / $SiO_2$ / $TiO_z$ oder $TiO_2$ / $SiO_2$ / $SiO_x$ / Al / $SiO_x$ / $SiO_2$ /$TiO_2$, insbesondere $TiO_2$ / $SiO_2$ / $SiO_x$ / Al / $SiO_x$ / $SiO_2$ / $TiO_2$, worin $0,03 \leq x < 0,95$ und $0,95 \leq z \leq 2,0$, insbesondere $1,40 \leq z \leq 2,0$.

**5.** Wässrige Tintenzusammensetzung nach Anspruch 3, worin das Glanzpigment die nachstehende Schichtstruktur aufweist:

(b2) $SiO_z$-Schicht, insbesondere $SiO_2$-Schicht,
(b1) $SiO_x$-Kern, worin $0,03 \leq x < 0,95$,
(b2) $SiO_z$-Schicht, insbesondere $SiO_2$-Schicht, oder
(b3) Schicht $D^M$, insbesondere $TiO_2$,
(b2) $SiO_z$-Schicht, insbesondere $SiO_2$-Schicht,
(b1) $SiO_x$-Kern, worin $0,03 \leq x < 0,95$,
(b2) $SiO_z$-Schicht, insbesondere $SiO_2$-Schicht,
(b3) Schicht $D^M$, insbesondere $TiO_2$.

**6.** Wässrige Tintenzusammensetzung nach Anspruch 4, worin die Materialien für die Schicht $D^M$ ausgewählt sind aus Metallen, wie Ag, Al, Au, Cu, Co, Cr, Fe, Ge, Mo, Nb, Ni, Si, Ti, V, Legierungen davon, anorganischen oder organischen Pigmenten oder Färbemitteln, Graphit und Verbindungen ähnlich zu Graphit, Metalloxiden oder -sulfiden, wie $MOS_2$, $TiO_2$, $ZrO_2$, SiO, $SnO_2$, $GeO_2$, ZnO, $Al_2O_3$, $V_2O_5$, $Fe_2O_3$, $Cr_2O_3$, $PbTiO_3$ oder CuO und Gemischen davon.

**7.** Verfahren zum Drucken eines ebenen Substrats gemäß dem Tintenstrahldruckverfahren, das Bedrucken des Substrats mit einer wässrigen Tintenzusammensetzung nach einem der Ansprüche 1 bis 6 umfasst.

**Revendications**

**1.** Composition d'encre aqueuse pour le procédé d'impression par jet d'encre, qui comprend

A) des particules en forme de plaquette inorganiques métalliques ou non métalliques ayant un diamètre moyen de particules d'au moins 2 μm, où les particules en forme de plaquette sont des pigments qui comprennent

(a1) un noyau constitué d'une matière pratiquement transparente ou métalliquement réfléchissante et
(a2) au moins un revêtement essentiellement constitué d'un ou plusieurs oxydes de silicium (couche de $SiO_x$), dans lequel le rapport molaire moyen de l'oxygène au silicium est de 0,03 à < 0,95,

ou dans lequel les particules en forme de plaquette sont des flocons d'aluminium revêtus de $SiO_z$ où 0,95 = z = 2,0, en particulier 1,1 = z = 2,0, plus particulièrement 1,4 = z = 2,0,

b) un dispersant (agent dispersant) et
c) un liant,

**2.** Composition d'encre aqueuse selon la revendication 1, dans laquelle le pigment a la structure de couche suivante :

(a3) $SiO_z$, en particulier $SiO_2$,
(a2) au moins un revêtement essentiellement constitué d'un ou plusieurs oxydes de silicium dans lequel le rapport molaire moyen de l'oxygène au silicium est de 0,03 à < 0,95,
(a1) un noyau constitué d'une matière pratiquement transparente ou métalliquement réfléchissante, et
(a2) au moins un revêtement essentiellement constitué d'un ou plusieurs oxydes de silicium dans lequel le rapport molaire moyen de l'oxygène au silicium est de 0,03 à < 0,95,
(a3) $SiO_z$, en particulier $SiO_2$, ou
(a4) un revêtement constitué de n'importe quelle matière solide souhaitée dont la composition est différente de celle du revêtement (a3),
(a3) $SiO_z$, en particulier $SiO_2$,
(a2) au moins un revêtement essentiellement constitué d'un ou plusieurs oxydes de silicium dans lequel le rapport molaire moyen de l'oxygène au silicium est de 0,03 à < 0,95,
(a1) un noyau constitué d'une matière pratiquement transparente ou métalliquement réfléchissante, et
(a2) au moins un revêtement essentiellement constitué d'un ou plusieurs oxydes de silicium dans lequel le

rapport molaire moyen de l'oxygène au silicium est de 0,03 à < 0,95,
(a3) $SiO_z$, en particulier $SiO_2$,
(a4) un revêtement constitué de n'importe quelle matière solide souhaitée dont la composition est différente de celle du revêtement (a3),

**3.** Composition d'encre aqueuse selon la revendication 1, dans laquelle les particules en forme de plaquette sont des pigments brillants comprenant

(a) un noyau essentiellement constitué d'un ou plusieurs oxydes de silicium (couche de $SiO_x$) dans lequel le rapport molaire moyen de l'oxygène au silicium est de 0,03 à < 0,95,
(b) éventuellement, une couche de $SiO_z$ dans laquelle 0,95 = z = 2,0, en particulier 1,1 = y = 2,0, pour particulièrement 1,4 = y = 2,0, particulièrement une couche de $SiO_2$,
(c) éventuellement, une couche de $D^M$ ayant une transparence de 50% à 100% et un indice de réfraction complexe N = n + ik satisfaisant la condition $\sqrt{n^2+k^2} = 1,5$ à la longueur d'onde de la réflexion visible maximale des particules, qui est essentiellement composée de carbone, d'un composé organique, d'un métal, d'un diélectrique ou d'un mélange de ceux-ci, et qui est au-dessus du noyau

ou, si une couche de $SiO_z$ est présente, est séparée du noyau par la couche de $SiO_z$.

**4.** Composition d'encre aqueuse selon la revendication 3, dans laquelle le pigment brillant a la structure de couche suivante: $SiO_x/SiO_z/SiO_x$, $SiO_2/SiO_x/SiO_2/SiO_x/SiO_z$, en particulier $SiO_2/SiO_x/SiO_z/SiO_x/SiO_2$, $SiO_x/Al/SiO_x$, $SiO_z/SiO_x/Al/SiO_x/SiO_z$, en particulier $SiO_2/SiO_x/Al/SiO_x/SiO_2$, $TiO_2/SiO_z/SiO_x/SiO_z/SiO_x/SiO_z/TiO_2$, en particulier $TiO_2/SiO_2/SiO_x/SiO_z/SiO_x/SiO_2/TiO_2$ ou $TiO_2/SiO_2/SiO_x/Al/SiO_x/SiO_2/TiO_2$, en particulier $TiO_2/SiO_2/SiO_x/Al/SiO_x/SiO_2/TiO_2$, dans lequel 0,03 = x < 0,95 et 0,95 = z = 2,0, en particulier 1,40 = z = 2,0.

**5.** Composition d'encre aqueuse selon la revendication 3, dans laquelle le pigment brillant a la structure de couche suivante :

(b2) une couche de $SiO_z$, en particulier une couche de $SiO_2$,
(b1) un noyau de $SiO_x$ dans lequel 0,03 = x < 0,95,
(b2) une couche de $SiO_z$, en particulier une couche de $SiO_2$, ou
(b3) une couche de $D^M$, en particulier $TiO_2$,
(b2) une couche de $SiO_z$, en particulier une couche de $SiO_2$,
(b1) un noyau de $SiO_x$ dans lequel 0,03 = x < 0,95,
(b2) une couche de $SiO_z$, en particulier une couche de $SiO_2$,
(b3) une couche de $D^M$, en particulier $TiO_2$.

**6.** Composition d'encre aqueuse selon la revendication 4, dans laquelle les matières pour la couche de $D^M$ sont choisies parmi les métaux tels que Ag, Al, Au, Cu, Co, Cr, Fe, Ge, Mo, Nb, Ni, Si, Ti, V, les alliages de ceux-ci, les pigments ou les colorants organiques ou inorganiques, le graphite et les composés similaires au graphite, les oxydes métalliques ou les sulfures tels que $MoS_2$, $TiO_2$, $ZrO_2$, SiO, $SnO_2$, $GeO_2$, ZnO, $Al_2O_3$, $V_2O_5$, $Fe_2O_3$, $Cr_2O_3$, $PbTiO_3$ ou CuO, et les mélanges de ceux-ci.

**7.** Procédés d'impression d'un substrat plat selon le procédé d'impression par jet d'encre, qui comprend l'impression, du substrat avec une composition d'encre aqueuse selon l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6433117 B
- DE 19727767 A
- EP 803549 B
- EP 0309296 W
- WO 0012634 A
- WO 0018978 A
- WO 02090613 A
- WO 0390613 A
- US 6270840 B
- US 4321087 A
- DE 3020073 A
- EP 170474 A
- EP 133644 A
- US 4565716 A
- US 4808231 A
- EP 240367 A
- EP 305560 A
- EP 104075 A
- US 2904523 A
- US 4693754 A
- EP 259592 A
- DE 3002175 A
- US 2885366 A
- US 3954496 A
- DE 3003352 A
- DE 3813335 A
- DE 3630356 A
- DE 3147177 A
- EP 477433 A
- CA 1273733 A
- AT 372696 A
- DE 3807588 A
- EP 319971 A
- EP 826745 A
- DE 19501307 A
- US 5763086 B
- DE 4405492 A
- DE 4437752 A
- DE 4414079 C
- US 5059245 A
- US 3438796 A
- WO 9308237 A
- DE 1467468 A
- DE 1959988 A
- DE 2009566 A
- DE 2214545 A
- DE 2215191 A
- DE 2244298 A
- DE 2313331 A
- DE 2522572 A
- DE 3137808 A
- DE 3137809 A
- DE 3151343 A
- DE 3151354 A
- DE 3151355 A
- DE 3211602 A
- DE 3235017 A
- WO 9853001 A
- US 6132873 A
- DE 4342574 C
- US 6202591 B
- EP 0302196 W
- EP 982376 A
- WO 0043565 A
- DE 19844357 A
- EP 990715 A
- US 5135812 B
- WO 0157287 A
- EP 803549 A
- US 5186846 A
- US 4218218 B
- US 6417249 B
- EP 279303 A
- EP 704469 A
- EP 12339 A
- US 6124376 B


### Non-patent literature cited in the description


- **G. WASSERMANN.** Ullmanns Enzyklopädie der Industriellen Chemie. Verlag Chemie, vol. 7, 281-292
- **R. BESOLD.** Aluminiumpigmente für wässrige Beschichtungen - Widerspruch oder Wirklichkeit?. *Farbe + Lack,* 1991, vol. 97, 311-314
- CRC Handbook of Chemistry and Physics. 12-133
- Chemistry & Technology of UV & EB Formulation for Coatings. Inks & Paints. SITA Technology, 1991
- The Printing Ink Manual. Van Nostrand Reinhold (International, 1989

- UV & EB Curing Formulation for Printing Inks and Paints. SITA Technology, 1984
- the company paper Vinyl Ethers. The Innovative Challenge. BASF Aktiengesellschaft, 1997